(19) Europäisches Patentamt
European Patent Office
Office européen des brevets

(11) EP 0 864 892 A2

(12) **EUROPÄISCHE PATENTANMELDUNG**

(43) Veröffentlichungstag:
16.09.1998 Patentblatt 1998/38

(51) Int. Cl.⁶: **G02B 6/42**, G02B 27/09

(21) Anmeldenummer: 97119869.2

(22) Anmeldetag: 13.11.1997

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 13.03.1997 DE 19710272

(71) Anmelder: ROBERT BOSCH GMBH
70442 Stuttgart (DE)

(72) Erfinder:
• Hauer, Heiner
  70734 Fellbach (DE)
• Kuke, Albrecht, Dr.
  71549 Auenwald (DE)
• Moess, Eberhard
  71540 Murrhardt (DE)
• Sommerfeldt, Ralph, Dr.
  71522 Backnang (DE)

(54) **Linsensystem zur Ankopplung eines Halbleiterlasers an eine Lichtleitfaser**

(57) Die Erfindung betrifft ein Linsensystem zur Ankopplung eines Halbleiterlasers, insbesondere mit stark elliptischer Feldverteilung, an eine Lichtleitfaser, insbesondere mit einer zirkularsymmetrischen Feldverteilung, wobei die Feldanpassung über wenigstens ein anamorphotisches optisches Element erfolgt.

Es ist vorgesehen, daß das anamorphotische optische Element (22) zwischen einer dem Halbleiterlaser (12) zugeordneten zirkularsymmetrischen Kollimierungslinse (18) und einer der Lichtleitfaser (14) zugeordneten zirkularsymmetrischen Fokussierungslinse (20) angeordnet ist.

Fig. 1

Printed by Xerox (UK) Business Services
2.16.3/3.4

EP 0 864 892 A2

# Beschreibung

Die Erfindung betrifft ein Linsensystem zur Ankopplung eines Halbleiterlasers, insbesondere mit stark elliptischer Feldverteilung, an eine Lichtleitfaser, insbesondere mit einer zirkularsymmetrischen Feldverteilung, wobei die Feldanpassung über wenigstens ein anamorphotisches optisches Element erfolgt.

Stand der Technik

Bei vielen optischen Anwendungen, insbesondere zur optischen Signalübertragung, ist es bekannt, einmodige Lichtleitfasern zu verwenden. Zur Signaleinkopplung in die Lichtleitfasern sind Halbleiterlaser vorgesehen. Hierbei muß das aus dem Halbleiterlaser austretende optische Feld in die Lichtleitfaser eingekoppelt werden.

Die von einem Halbleiterlaser und einer Lichtleitfaser geführten optischen Strahlbündel lassen sich in guter Naherung durch Gaußsche Strahlen beschreiben. Bei einer einmodigen Lichtleitfaser liegt die Strahltaille des von der Lichtleitfaser akzeptierten eintretenden Strahls an seiner Stirnfläche und hat eine zirkularsymmetrische Feldverteilung. Der Halbleiterlaser strahlt üblicherweise einen Gaußschen Strahl mit einer elliptischen Strahltaille ab, deren Halbachsen wesentlich kleiner sind, als der Taillenradius des optischen Feldes der Lichtleitfaser. Diese stark voneinander abweichenden Feldverteilungen, einerseits der elliptischen Feldverteilung des Halbleiterlasers und andererseits der zirkularsymmetrischen Feldverteilung der Lichtleitfaser, führen bei direkter Einkopplung in die Stirnfläche der Lichtleitfaser zu erheblichen Koppelverlusten.

Um diese Koppelverluste zu minimieren ist es bekannt, eine Transformation der optischen Strahlen durchzuführen. Hierzu werden beispielsweise zirkularsymmetrische Linsen zwischen dem Halbleiterlaser und der Lichtleitfaser vorgesehen. Diese haben jedoch den Nachteil, daß eine vollständige Feldanpassung nicht erreicht werden kann, da zirkularsymmetrische Linsen die elliptische Feldverteilung des Halbleiterlasers nicht in eine zirkularsymmetrische Feldverteilung der Lichtleitfaser umwandeln können. Insbesondere bei Halbleiterlasern mit einer starken elliptischen Feldverteilung mit einem Achsverhältnis von beispielsweise > 3,5 ist mit einer zirkularsymmetrischen Feldtransformation ein Koppelwirkungsgrad von ca. 60 % erreichbar.

Darüber hinaus sind anamorphotische Linsen bekannt, die unterschiedliche Krümmungen in den senkrecht zur Lichtausbreitungsrichtung liegenden Ebenen aufweisen.

Mittels derartiger Linsen läßt sich eine elliptische Feldverteilung in eine zirkularsymmetrische Feldverteilung transformieren, so daß ein theoretischer Koppelwirkungsgrad von 100 % zwischen dem Halbleiterlaser und der Lichtleitfaser erreichbar ist. Bei dem Einsatz von anamorphotischen Linsen ist jedoch nachteilig, daß diese sehr exakt zwischen dem Halbleiterlaser und der Lichtleitfaser positioniert werden müssen, wobei die kritischen Toleranzanforderungen sowohl in axialer, vertikaler und Winkelausrichtung sehr hoch sind, da geringste Abweichungen zu Verlusten beim Koppelwirkungsgrad führen.

Vorteile der Erfindung

Das erfindungsgemäße Linsensystem mit den im Anspruch 1 genannten Merkmalen bieten demgegenüber den Vorteil, daß mittels einer einfachen Anordnung höchste Koppelwirkungsgrade erreichbar sind. Dadurch, daß das anamorphotische optische Element zwischen einer dem Halbleiterlaser zugeordneten zirkularsymmetrischen Kollimierungslinse und einer der Lichtleitfaser zugeordneten zirkularsymmetrischen Fokussierungslinse angeordnet ist, ist die axiale Positionierung des anamorphotischen optischen Elementes unkritisch, das heißt, die Toleranzanforderungen sind nicht so hoch, da das anamorphotische optische Element im kollimierten Strahlengang der dem Halbleiterlaser zugeordneten zirkularsymmetrischen Kollimierungslinse liegt.

In bevorzugter Ausgestaltung des Linsensystems ist vorgesehen, daß zumindest das anamorphotische optische Element in einer selbstjustierenden Struktur angeordnet ist, so daß eine exakte Winkelausrichtung zur optischen Achse des Linsensystems und eine exakte azimutale Winkelausrichtung des anamorphotischen optischen Elementes zu einer Feldachse des zu transformierenden optischen Feldes erfolgt. Vorzugsweise ist vorgesehen, daß das anamorphotische optische Element in einer anisotrop geätzten Nut eines das gesamte Linsensystem aufnehmenden Wafers, insbesondere Siliciumwafers, angeordnet ist. Hierdurch kann durch eine kreiszylindrische Außenfläche des anamorphotischen optischen Elementes die Selbstjustage durch Einlage in eine derartige V-Nut erfolgen, wobei zwischen einem Durchmesser des anamorphotischen optischen Elementes und dem Flankenverlauf der V-Nut zur exakten und justagefreien Einhaltung der Winkelausrichtungen eine angepaßte Formgebung erfolgt. Die Herstellung der V-Nuten ist mittels allgemein bekannter Verfahren anisotroper Ätztechniken bekannt.

Weitere vorteilhafte Ausgestaltungen der Erfindung ergeben sich aus den übrigen in den Unteransprüchen genannten Merkmalen.

Zeichnungen

Die Erfindung wird nachfolgend in Ausführungsbeispielen anhand der zugehörigen Zeichnungen näher erläutert. Es zeigen:

Figur 1 und Figur 2    das erfindungsgemäße Linsensystem in einem ersten Ausführungsbeispiel und

Figur 3 und Figur 4    das erfindungsgemäße Linsensystem in einem zweiten Ausführungsbeispiel.

Beschreibung der Ausführungsbeispiele

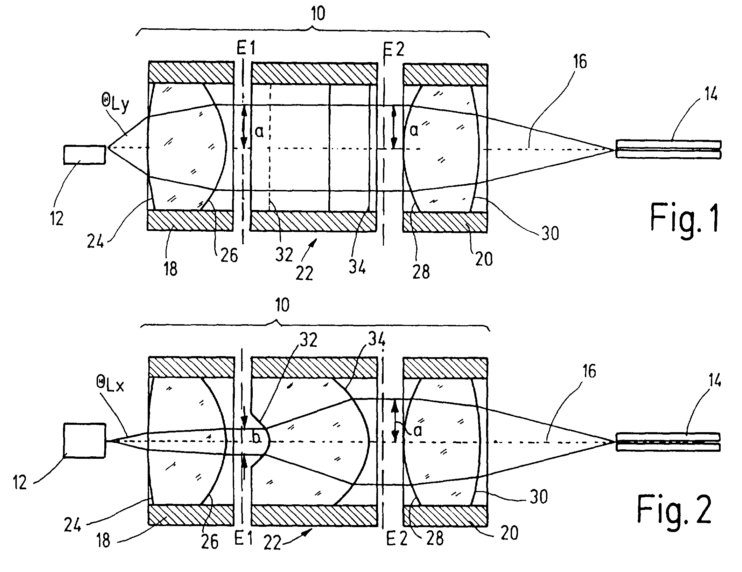

In den Figuren 1 und 2 ist ein Linsensystem 10 gezeigt, das der optischen Feldanpassung eines von einem Halbleiterlaser 12 generierten optischen Signals an eine Lichtleitfaser 14 übernimmt. In Figur 1 ist eine Seitenansicht und in Figur 2 eine Draufsicht auf das Linsensystem 10 gezeigt. Die Seitenansicht zeigt eine YZ-Ebene, wobei bei einem gedachten karthesischen Koordinatensystem die Z-Achse mit einer optischen Achse 16 des Linsensystems 10 zusammenfällt. Die Y-Achse verläuft senkrecht zur optischen Achse 16. Die Draufsicht in Figur 2 zeigt die XZ-Ebene, wobei hier die X-Achse ebenfalls senkrecht auf der optischen Achse 16 und senkrecht zu der Y-Achse gemäß Figur 1 verläuft.

Das Linsensystem 10 weist eine dem Halbleiterlaser 12 zugeordnete zirkularsymmetrische Kollimierungslinse 18 und eine der Lichtleitfaser 14 zugeordnete zirkularsymmetrische Fokussierungslinse 20 auf. Zwischen der Kollimierungslinse 18 und der Fokussierungslinse 20 ist ein anamorphotisches optisches Element 22 angeordnet. Die Kollimierungslinse 18 und die Fokussierungslinse 20 können als zirkularsymmetrische spärische oder aspärische Linsen ausgebildet sein.

Das Linsensystem 10 ist in einer, aus Gründen der Übersichtlichkeit nicht dargestellten v-förmigen Nut eines optischen Bauelementes, das den Halbleiterlaser 12 und das Linsensystem 10 sowie die Ankoppelstelle an die Lichtleitfaser 14 aufweist, angeordnet. Die äußeren Mantelflächen der Kollimierungslinse 18, der Fokussierungslinse 20 und des anamorphotischen optischen Elementes 22 sind Kreiszylinderflächen, so daß durch Einlegen der Kollimierungslinse 18, der Fokussierungslinse 20 sowie des anamorphotischen optischen Elementes 22 in die V-Nut eine Selbstjustierung hinsichtlich einer Positionierung zu der optischen Achse 16 erfolgt. Durch entsprechende Ausgestaltung des Durchmessers der Bestandteile des Linsensystems 10 und der Flanken der V-Nut kann eine definierte Position zu der optischen Achse 16 eingenommen werden. Insbesondere ist eine exakte Winkelausrichtung zu der optischen Achse 16 möglich.

Die Kollimierungslinse 18 besitzt eine konvexe Lichteintrittsfläche 24 und eine konvexe Lichtaustrittsfläche 26. Die Fokussierungslinse 20 besitzt ebenfalls eine konvexe Lichteintrittsfläche 28 und eine konvexe Lichtaustrittsfläche 30. Das anamorphotische optische Element 22 besitzt eine zylinderförmige konkave Lichteintrittsfläche 32 und eine zylinderförmige konvexe Lichtaustrittsfläche 34. Die zylindrische Lichteintrittsfläche 32 und die zylindrische Lichtaustrittsfläche 34 besitzen gemäß den Gesetzen der Optik eine derartige Krümmung, daß für die konkave Lichteintrittsfläche 32 eine virtuelle Brennlinie parallel zur Y-Achse und für die konvexe Lichtaustrittsfläche 34 eine reelle Brennlinie entsteht, die mit der virtuellen Brennlinie der Lichteintrittsfläche 32 zusammenfällt.

Das in den Figuren 1 und 2 gezeigte Linsensystem 10 übt folgende Funktionen aus:

Von dem Halbleiterlaser 12 wird ein optisches Signal gesendet, dessen Feldverteilung gemäß der Gaußschen Strahlen elliptisch mit den Feldwinkeln $\Theta_{LY}$ und $\Theta_{LX}$ ist. Dieses elliptische Feld wird durch die Kollimierungslinse 18 kollimiert, so daß der kollimierte Strahl in der Ebene E1 eine Halbachse a in Richtung der Y-Achse und eine Halbachse b in Richtung der X-Achse aufweist. Das Verhältnis der Halbachsen a zu b beträgt beispielsweise > 3,5.

Dieser kollimierte Strahl mit den Halbachsen a und b wird mittels des anamorphotischen optischen Elementes 22 in einen Strahl in der Ebene E2 transformiert, dessen Halbachse b der Halbachse a entspricht. Hierdurch wird aus dem elliptischen Feld in der Ebene E1 ein nahezu zirkulares Feld in der Ebene E2 erzeugt. Das Feld ist in der Ebene E2 immer noch kollimiert.

Durch die Einstellung der Krümmung der konkaven Lichteintrittsfläche 32 und der konvexen Lichtaustrittsfläche 34, in dem die virtuelle Brennlinie der Lichteintrittsfläche 32 mit der reellen Brennlinie der Lichtaustrittsfläche 34 zusammenfällt und ein Verhältnis der virtuellen Brennweite $f_1$ der Lichteintrittsfläche 32 zu einer reellen Brennweite $f_2$ der Lichtaustrittsfläche 34 so gewählt ist, das

$$f2/f1 = a/b$$

ist, wird die Transformation des elliptischen Feldes in der Ebene E1 in das zirkulare Feld in der Ebene E2 möglich. Die Einstellung der Brennweiten $f_1$ und $f_2$ erfolgt über die Wahl einer Dicke - in Richtung der optischen Achse 16 gesehen - des anamorphotischen optischen Elementes 22.

Der in der Ebene E2 anliegende zirkularische Strahl wird mittels der Fokussierungslinse 20 auf die optische Achse 16 der Lichtleitfaser 14 fokussiert.

Durch die beschriebene Linsenanordnung 10 wird eine Anpassung des elliptischen Feldes des Halbleiterlasers 12 an das zirkularsymmetrische Feld der Lichtleitfaser 14 mit einem hohen Koppelwirkungsgrad möglich. Eine Toleranz des Abstandes der Kollimierungslinse 18 zu den anamorphotischen optischen Element 22 ist hierbei unkritisch, da das anamorphotische Element 22 mit seiner Lichteintrittsfläche 32 im kollimierten Strahlengang der Kollimierungslinse 18 liegt. Durch die Einstellung der Krümmungen der Lichteintrittsfläche 32 und der Lichtaustrittsfläche 34 wird auch bei Abweichungstoleranzen die Transformation des elliptischen Feldes von der Ebene E1 in das zirkulare Feld in der Ebene E2 sichergestellt.

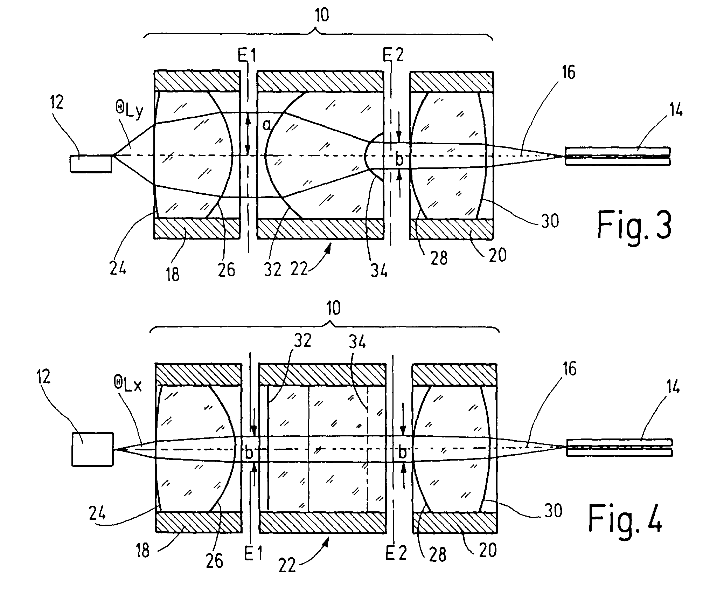

In den Figuren 3 und 4 ist eine weitere Ausführungsvariante des Linsensystems 10 gezeigt, wobei gleiche Teile wie in Figur 1 mit gleichen Bezugszeichen versehen und nicht nochmals erläutert sind. Hinsichtlich des Aufbaues und der Funktionsweise wird insofern auf die Beschreibung zu Figur 1 und 2 verwiesen.

Bei dem in Figur 3 und 4 gezeigten Ausführungsbeispiel ist das anamorphotische optische Element 22 gegenüber der Darstellung in den Figuren 1 und 2 um 180 Grad in bezug auf die optische Achse 16 und azimutal um 90 Grad gedreht angeordnet. Somit ist die Lichteintrittsfläche 32 konvex und die Lichtaustrittsfläche 34 konkav, wobei die Krümmungen nunmehr in der YZ-Ebene liegen, während die Krümmungen gemäß dem Ausführungsbeispiel in Figur 1 und 2 in der XZ-Ebene liegen.

Durch eine derartige Anordnung wird erreicht, daß die Halbachse a in der Ebene E1 auf die Halbachse b in der Ebene E2 transformiert, das heißt, verringert wird. Somit wird ebenfalls das elliptische Feld in der Ebene E1 in ein zirkulares Feld in der Ebene E2 transformiert. Das zirkulare Feld in der Ebene E2 besitzt hier den der Halbachse b entsprechenden Radius, so daß die Fokussierungslinse 20 mit entsprechend geringer Brennweite ausgestattet werden kann.

Das Verhältnis der Brennweite der Lichteintrittsfläche 32 zur Lichtaustrittsfläche 34, also jetzt $f_2/f_1$, ist weiterhin gleich dem Verhältnis der Halbachsen a/b.

Insgesamt lassen sich mit den gezeigten Ausführungsbeispielen sehr hohe Koppelwirkungsgrade von nahe 100 % erreichen. Die Kollimierungslinsen 18 beziehungsweise Fokussierungslinsen 20 können von einfachen zirkulationssymmetrischen Linsen gebildet sein, die mit hoher Justagegenauigkeit an die Halbleiterlaser 12 beziehungsweise Lichtleitfaser 14 ankoppelbar sind. Das anamorphotische optische Element 22 läßt sich - wie erläutert - ebenfalls in einfacher Weise mit hoher Genauigkeit in einem selbstjustierenden Prozeß, insbesondere hinsichtlich der kritischen Winkelausrichtungen, positionieren.

Da das anamorphotische optische Element 22 an seiner Lichteintrittsfläche 32 als auch seiner Lichtaustrittsfläche 34 eine zylindrische Form aufweist, kann dieses durch Schleif- und Polierprozesse oder durch Prägung leicht hergestellt werden.

**Patentansprüche**

1. Linsensystem zur Ankopplung eines Halbleiterlasers, insbesondere mit stark elliptischer Feldverteilung, an eine Lichtleitfaser, insbesondere mit einer zirkularsymmetrischen Feldverteilung, wobei die Feldanpassung über wenigstens ein anamorphotisches optisches Element erfolgt, **dadurch gekennzeichnet**, daß das anamorphotische optische Element (22) zwischen einer dem Halbleiterlaser (12) zugeordneten zirkularsymmetrischen Kollimierungslinse (18) und einer der Lichtleitfaser (14) zugeordneten zirkularsymmetrischen Fokussierungslinse (20) angeordnet ist.

2. Linsensystem nach Anspruch 1, **dadurch gekennzeichnet**, daß eine Lichteintrittsfläche (32) und eine Lichtaustrittsfläche (34) des anamorphotischen optischen Elementes (22) von Zylinderflächen gebildet sind, deren Mantellinien parallel zueinander verlaufen.

3. Linsensystem nach einem der vorhergehenden Ansprüche, **dadurch gekennzeichet**, daß die Lichteintrittsfläche (32) konkav gekrümmt und die Lichtaustrittsfläche (34) konvex gekrümmt ist, wobei eine virtuelle Brennlinie der Lichteintrittsfläche (32) mit einer reellen Brennlinie der Lichtaustrittsfläche (34) zusammenfällt.

4. Linsensystem nach einem der vorhergehenden Ansprüche, **dadurch gekennzeichet**, daß das Verhältnis einer virtuellen Brennweite ($f_1$) der Lichteintrittsfläche (32) zur einer reellen Brennweite ($f_2$) der Lichtaustrittsfläche (34) so gewählt ist, daß dieses dem Verhältnis einer Halbachse (a) zu einer Halbachse (b) des elliptischen Strahlenfeldes des Halbleiterlasers (12) entspricht.

5. Linsensystem nach einem der vorhergehenden Ansprüche, **dadurch gekennzeichnet**, daß die Lichteintrittsfläche (32) konvex und die Lichtaustrittsfläche (34) konkav gekrümmt sind, wobei das Verhältnis der virtuellen Brennweite ($f_2$) der Lichteintrittsfläche (32) zum Verhältnis der reellen Brennweite ($f_1$) der Lichtaustrittsfläche (34) dem Verhältnis der Halbachsen (a, b) des elliptischen Feldes des Halbleiterlasers (12) entspricht.

Fig. 1

Fig. 2

EP 0 864 892 A2

Fig. 3

Fig. 4